# EUROPEAN PATENT SPECIFICATION

(11) **EP 2 310 217 B1**
(45) Date of publication and mention of the grant of the patent: **26.04.2017**
(21) Application number: 08875873.5
(22) Date of filing: 04.12.2008
(51) Int. Cl.: B60G 21/05

(54) **CROSS-MEMBER FOR A REAR TWIST-BEAM AXLE SUSPENSION FOR A MOTOR VECHICLE AND METHOD FOR ITS PRODUCTION**
QUERTRÄGER FÜR EINE VERBUNDLENKER-HINTERACHSE FÜR EIN KRAFTFAHRZEUG UND HERSTELLUNGSVERFAHREN DAFÜR
TRAVERSE POUR SUSPENSION D'ESSIEU DE TORSION ARRIÈRE DE VÉHICULE À MOTEUR ET PROCÉDÉ DE PRODUCTION

(30) Priority: 08.07.2008 IT TO20080521
(43) Date of publication of application: 20.04.2011
(73) Proprietor: Sistemi Sospensioni S.p.A., 20011 Corbetta (Milano) (IT)
(72) Inventor: ALESSO, Guido Sebastiano, I-12038 Savigliano (Cuneo) (IT); TRINCHERA, Massimo, I-10144 Torino (IT); CASTAGNO, Lorenzo, I-10125 Torino (IT); SANTINI, Andrea, I-10093 Collegno (Torino) (IT); MONCHIERO, Piero, I-10137 Torino (IT)
(74) Representative: Rondano, Davide
(86) International application number: PCT/IB2008/055103
(87) International publication number: WO 2010/004370

(56) References cited:
- EP-A- 0 733 501
- EP-A- 1 080 954
- EP-A- 2 020 314
- WO-A-2006/061424
- FR-A- 2 898 543
- JP-A- 2002 127 724
- JP-A- 2004 299 513
- US-A1- 2002 117 890
- US-A1- 2002 190 495

## Description

The present invention relates to a cross-member for a twist-beam axle suspension for a motor vehicle, particularly for a rear suspension, as well as to method for its production.

Rear twist-beam axle suspensions for motor vehicles are known which comprise a central cross-member and a pair of trailing arms which are rigidly connected to the opposite transverse ends of the cross-member and carry at their rear ends respective members for support of the wheel axles and at their front ends respective members for attachment to the vehicle body. While the trailing arms can be considered as rigid components, in that they are subject to negligible deformations in normal load conditions, the cross-member must have, on the other hand, a certain compliance, particularly under torsion, to allow the trailing arms to rotate elastically with respect to one another.

Since the length of the cross-member is basically imposed by the specific application, as it is linked to the vehicle's tread, the torsional stiffness of the cross-member can be changed to take a given design value by properly shaping the cross-section of the cross-member, particularly the cross-section in the middle plane. In this connection, the cross-members currently used in the twist-beam axle suspensions for motor vehicles can be classified into two distinct categories. On the one hand, there are open-section cross-members consisting of a sheet-metal beam which is generally obtained by stamping or other plastic deformation process and has a cross-section with an outline of a variety of shapes, for instance of C-, U-, V- or Ω-live shape. On the other hand, there are closed-section cross-members consisting of a metal tubular beam which is plastically deformed, for instance by stamping or hydroforming process, so that its cross-section is given a predetermined shape such as to provide the beam with the desired torsional stiffness characteristics. In particular, the most important characteristic of the cross-section of the cross-member is the vertical position of the shear centre, as it directly and heavily affects the toe change of the suspension under roll, which is one the most important parameters for the assessment of the performance of the suspension in terms of handling. Cross-members with middle cross-sections having the same vertical size but different shapes and orientations have shear centres located at different heights and therefore affect the kinematic and elasto-kinematic performances of the suspension in different ways.

Irrespective of the shape of the cross-section, the cross-members currently used in the twist-beam axle suspensions for motor vehicles extend generally horizontally, i.e. their axes lie in substantially horizontal planes. Such a conformation of the cross-member causes problems of space availability when the wheels carried by the trailing arms of the twist-beam axle are driving wheels. It is the case for instance of a rear twist-beam axle suspension for a four- or rear-wheel drive motor vehicle. The problems of space availability are basically due to the presence of the drive shaft which extends longitudinally, i.e. perpendicularly to the cross-member, thereby "crossing" the cross-member itself.

In order to allow the use of a twist-beam axle suspension for the rear wheels of a four-wheel drive motor vehicle, a cross-member is known from European Patent application EP-A-0 733 501 which is bowed or arched at least in a middle portion thereof. By virtue of the fact that the middle portion of the cross-member extends upwards, the drive shaft intended to drive the rear wheels can pass underneath the middle portion without interfering with it. The cross-member may be arched throughout its width or may have only an arched middle portion which smoothly joins with respective straight end portions. The end portions of the cross-member, whether arched or straight, are inclined to the horizontal. Since the trailing arms extend on the other hand horizontally, the welded joints between the ends of the cross-member and the trailing arms have therefore a rather irregular and complex shape which leads to an irregular stress distribution with peak values which may cause structural problems.

Moreover, the cross-member known from European Patent application EP-A-0 733 501 has an open U-shaped cross-section. The choice of an open section does not allow to achieve particularly high values of torsional stiffness and makes therefore the cross-member not suitable for those application requiring a high torsional stiffness. Furthermore, the arched shape of the cross-member does not allow to add a torsion bar to increase the torsional stiffness of the cross-member.

European Patent application EP-A-1 080 954 discloses a cross-member for a rear twist-beam axle suspension for a motor vehicle which is obtained by cold-forming of a steel tube. The cross-member extends horizontally and includes a middle portion having a double-wall substantially U-shaped cross-section, a pair of end portions having a circular cross-section corresponding to that of the steel tube from which the cross-member is obtained, and a pair of intermediate portions which join the middle portion with the respective end portions and have a cross-section whose shape varies continuously from a circular one at the transversely outer end to a U-like one at the transversely inner end. A method for the production of a cross-member for a twist-beam axle suspension according to the preamble of independent claim 1 is known from WO2006/061424. It is an object of the present invention to provide a bowed cross-member for a rear twist-beam axle suspension for a motor vehicle which has a high mechanical strength, which provide the designer with a wide freedom in the positioning of the shear centre of the middle cross-section, which allows the use of the cross-member also in those applications in which the available space is reduced by the presence not only of the drive shaft but also of other components (for instance of the tube connecting the fuel filler neck to the tank). This and other objects are fully achieved according to the invention by virtue of a method for the production of a cross-member for a twist-beam axle suspension for a motor vehicle comprising the steps defined in the enclosed independent claim 1, as well as by virtue of a cross-member for a twist-beam axle suspension for a motor vehicle having the characteristics defined in the enclosed independent claim 3.

Advantageous embodiments of a cross-member for a twist-beam axle suspension for a motor vehicle according to the invention are the subject matter of the dependent claims, the content of which is to be intended as integral and integrating part of the present description.

In short, the invention is based on the idea of providing a bowed cross-member for a twist-beam axle suspension consisting of a single piece of steel of closed cross-section suitably shaped so as to have an arched middle portion, a pair of end portions intended to be securely connected each to a respective trailing arm of the suspension and a pair of arched joining portions, each of which is interposed between the middle portion and a respective end portion and has its concavity facing towards the opposite side with respect to the middle portion.

The end portions are preferably horizontal straight portions. The cross-member is preferably obtained from a tube which is suitably squashed on at least part of the arched middle portion, whereby the shape of its middle cross-section is such as to provide the required inertial characteristics.

By virtue of the arched middle portion, the cross-member can be used in rear twist-beam axle suspensions for four- or rear-wheel drive motor vehicles without interfering with the drive shaft. At the same time, by virtue of the horizontal straight end portions the cross-member on the one hand has less problems of space availability than the prior art discussed above and on the other hand has joining edges with the trailing arms which have a more regular shape than the prior art discussed above, whereby the above-mentioned problems due to the generation of stress peaks do not occur. Moreover, by virtue of the use of a squashed tube a middle cross-section is obtained which on the one hand is closed, and is therefore able to provide high values of torsional stiffness even without a torsion bar (which could not even be used due to the bowed shape of the cross-member), and on the other hand can be suitably shaped to locate the shear centre in the desired position in view of the kinematic and elasto-kinematic requirements of the suspension.

According to another advantageous feature of the invention, the orientation of the middle plane of the squashing in the arched middle portion of the cross-member (hereinafter simply referred to as squashing plane) can be set independently of the orientation of the middle plane on which the curvilinear axis of the cross-member (hereinafter simply referred to as camber plane) extends. The squashing plane (the orientation of which is linked to the position of the shear centre of the middle cross-section, and hence to the kinematic and elasto-kinematic performances of the suspension) and the camber plane (the orientation of which is linked to the size constraints the cross-member must comply with) must not therefore coincide with each other, but can also be inclined to each other. The designer of the suspension has therefore a wide freedom in looking for the best compromise among the different requirements, both in terms of layout and in terms of kinematic and elasto-kinematic performances of the suspension.

According to another feature of the invention, the end portions of the cross-member intended to be securely connected to the trailing arms of the twist-beam axle have an enlarged cross-section, that is to say, a cross-section of larger perimeter than that of the cross-section of the middle portion of the cross-member. The amount of the increase in the perimeter of the end portions with respect to the middle portion varies depending on the specific application, naturally within the limits linked to the ability of the material of the cross-member to absorb the deformation. The resulting increase in the inertial characteristics of the joining area with the trailing arms leads to an increase in the mechanical strength and hence to the possibility to transmit a greater torsion moment, as well as to an increase in the stiffness of the twist-beam axle under lateral loads, and hence to an improvement of the handling performances of the vehicle.

Further features and advantages of the invention will become more apparent from the following detailed description, given purely by way of non-limiting example with reference to the appended drawings, in which:
Figure 1 is a perspective view of a twist-beam axle for a rear suspension of a motor vehicle having a cross-member according to a preferred embodiment of the present invention;
Figure 2 is a perspective view of the cross-member of the twist-beam axle of Figure 1;
Figure 3 is a front elevation view of the cross-member of the twist-beam axle of Figure 1;
Figure 4 is a side view of the cross-member of the twist-beam axle of Figure 1; and
Figure 5 shows the middle cross-section of the cross-member of the twist-beam axle of Figure 1.

In the following description and claims, terms such as "longitudinal" and "transverse", "inner" and "outer", "front" and "rear", "upper" and "lower", are to be intended as referred to the mounted condition of the cross-member on the motor vehicle.

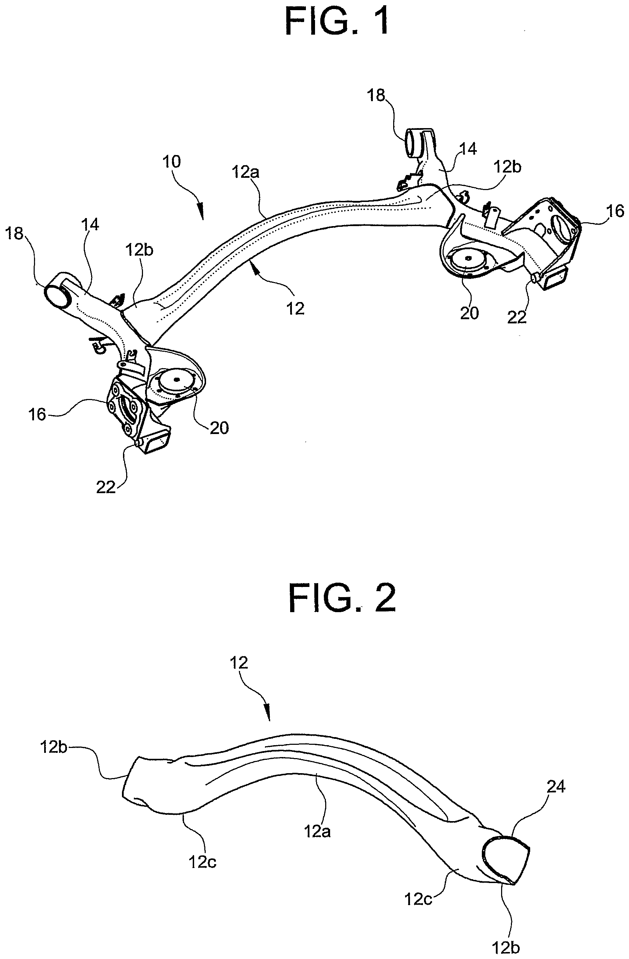

With reference first to Figure 1, a twist-beam axle for a motor-vehicle suspension, particularly for a rear suspension, is generally indicated 10 and basically comprises a bowed cross-member 12 and a pair of trailing arms 14 securely connected each to a respective side end of the cross-member 12. The trailing arms 14 carry respective wheel-carrying members 16, respective bushing seats 18 for articulated connection of the twist-beam axle 10 to the vehicle body (not shown), respective plates 20 for support of the springs (not shown), as well as respective attachment members 22 for the shock-absorbers (also not shown).

The cross-member 12 consists of a single tube of steel, preferably of manganese-boron steel (for instance, the 20MnB5 steel), or alternatively of low-alloy high-strength steel (cold- or hot-rolled), of multi-phase high-strength steel (cold- or hot-rolled), of two-phase high-strength steel (for instance, the DP600 steel), of ferritic-bainitic high-strength steel or again of high-alloy chromium stainless steel. With reference now to Figures 2 to 4 as well, the cross-member 12 comprises integrally a middle portion 12a, a pair of transversely opposite end portions 12b for connection of the cross-member with the trailing arms 14, and a pair of joining portions 12c which join each a respective end portion 12b with the middle portion 12a.

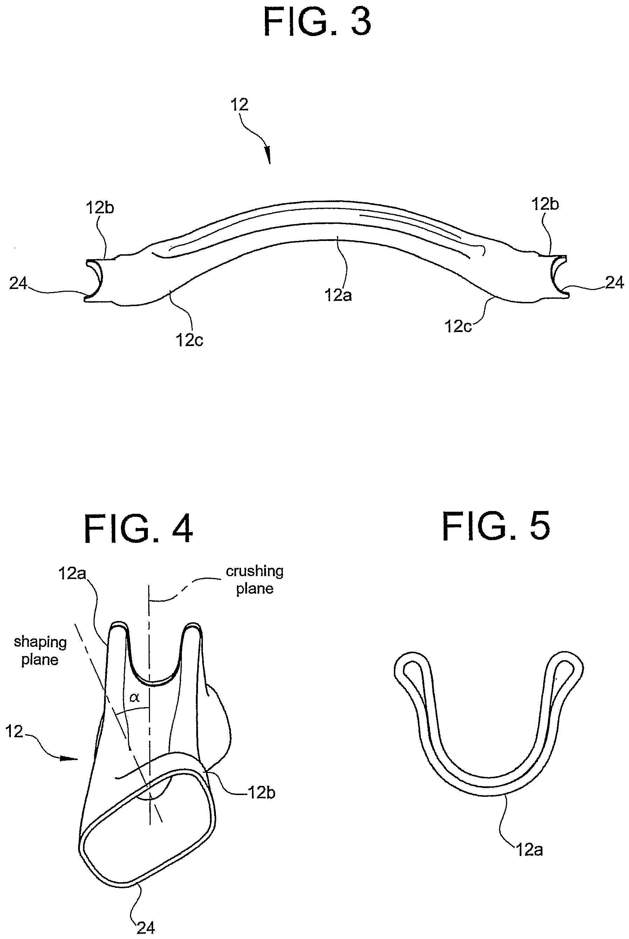

The middle portion 12a of the cross-member 12 has an arched shape, that is to say, its axis extends not along a straight line but along a curved arc-shaped line having a concavity facing downwards, and is therefore located at a greater height than the end portions 12b. The camber of the cross-member 12, that is to say, the vertical distance between the middle portion 12a and the end portions 12b, may take significantly high values, preferably higher than 100 mm. The cross-member 12 can thus be used in a rear twist-beam axle suspension for a rear- of four-wheel drive motor vehicle, since the drive shaft of the motor vehicle can pass underneath the middle portion 12a of the cross-member without interfering with it. The middle portion 12a has a closed cross-section with a suitable shape, for instance with a C-, U-, V-, Ω-like shape, or again with a shape having squashed lobes, which is obtained by squashing of the steel tube forming the cross-member. A particular example of middle cross-section of the cross-member is shown in Figure 5. As already stated in the introductory part of the description, the use of a closed cross-section makes it possible to achieve high values of torsional stiffness without having to resort to a torsion bar.

The end portions 12b of the cross-member 12 are preferably straight portions which preferably extend in a horizontal plane, i.e. substantially in the same plane as the trailing arms 14. Accordingly, the end portions 12a have each a joining edge 24 for welded connection with the respective trailing arm 14 which extends rather smoothly and leads therefore to a correspondingly smooth stress distribution, without such high peaks as to cause structural problems. As already stated in the introductory part of the description, the use of horizontal straight end portions also allows to reduce the size problems of the cross-member.

According to an embodiment, the end portions 12b of the cross-member 12 have a larger perimeter than the perimeter of the steel tube from which the cross-member 12 is obtained, i.e. than the perimeter of the middle portion 12a. The amount of increase in the perimeter of the cross-section of the end portions 12b with respect to the middle portion 12a varies depending on the specific application, remaining naturally within the limits due to the ability of the material of the cross-member to absorb the deformation. The resulting increase in the inertial characteristics of the joining area with the trailing arms leads to an increase in the mechanical strength and hence to the possibility to transmit a greater torsional moment, as well as to an increase in the stiffness of the twist-beam axle under lateral loads, and hence to an improvement of the handling performances of the vehicle.

The joining portions 12c of the cross-member 12 are arched portions the concavity of which faces towards the opposite side (upwards) with respect to the middle portion 12a. The cross-member 12 has therefore a generally curved outline with a double change of concavity in the zones between the joining portions 12c and the middle portion 12a.

The cross-member 12 is obtained by shaping and squashing a steel tube. More specifically, the first operation provides the cross-member with the required bowed outline, while the second operation provides the cross-member, particularly the middle portion thereof, with the required cross-section. These two operations are carried out by either cold- or hot-deformation of the steel tube by means of a special tool, that is to say, a shaping tool and a curving tool, respectively, which is moved in a given direction, typically a vertical direction. According to an advantageous feature of the invention, the orientation of the shaping plane and the orientation of the camber plane can be chosen independently of each other, so as to allow the designer of the suspension to choose the best compromise among the different requirements, both in terms of layout and in terms of kinematic and elasto-kinematic performances of the suspension. Such a possibility is provided by the fact that the method of production of the cross-member provides, between the shaping operation and the curving operation, the possibility to rotate the work-piece by an angle α equal to the desired angle of inclination between the shaping plane and the camber plane. This angle can be clearly observed in the side view of Figure 4.

The method of production of the cross-member according to the invention basically comprises the following steps:
a) cutting a steel tube of proper diameter to the desired length;
b) shaping the tube so as to provide it with the required curved outline;
c) rotating the shaped tube, if necessary, to obtain a given angle of inclination between the shaping plane and the squashing plane;
d) squashing the tube, particularly the arched middle portion thereof, to provide it with a cross-section having the required shape;
e) leaving the tube to recover;
f) enlarging and calibrating, if necessary, the end portions of the tube to such an extent that they have a cross-section with a larger perimeter than that of the cross-section of the tube;
g) thermally treating the tube;
h) calibrating the tube; and
i) definitively cutting the tube by means of a hydraulic or mechanical cutting tool or by means of a laser or plasma cutting apparatus.

The order in which the various steps listed above are carried out may be different from the one disclosed above, for instance the enlargement of the end portions of the cross-member may be carried out before providing the cross-member with the required arched shape, i.e. before the shaping step referred to above as step b). Some steps may even be omitted, in case they are not necessary.

Naturally, the principle of the invention remaining unchanged, the embodiments and constructional details may vary widely with respect to those described and illustrated purely by way of non-limiting example, without thereby departing from the scope of the invention as defined in the appended claims.

## Claims

1. Method for the production of a cross-member (12) for a twist-beam axle suspension (10) for a motor vehicle, particularly for a rear suspension, the method comprising the steps of:
a) cutting a tubular straight piece of steel to the desired length;
b) shaping a middle portion (12a) of said piece in a first plane so that this portion takes a given arched outline and is joined to a pair of end portions (12b) of the tube through a pair of joining portions (12c) each having a concavity facing towards the opposite side with respect to the middle portion (12a);
c) squashing at least the middle portion (12a) of the piece in a second plane so as to provide the middle cross-section thereof with a given shape;
**characterized in that** it further comprises, between steps b) and c), the step of
d) rotating the piece by a given angle to obtain a given angle of inclination between said first and second planes.

2. Method according to claim 1, further comprising the step of
e) enlarging each of the end portions (12b) of the piece so that the cross-section thereof has a larger perimeter than the middle cross-section of the middle portion (12a).

3. Cross-member (12) for a twist-beam axle suspension (10) for a motor vehicle, particularly for a rear suspension, consisting of a single tube of steel which has a closed cross-section and integrally forms
- an arched middle portion (12a),
- a pair of end portions (12b) which are arranged to be securely connected to respective trailing arms (14) of the twist-beam axle (10), and
- a pair of arched joining portions (12c), each of which is interposed between the middle portion (12a) and a respective end portion (12b) and has a concavity facing towards the opposite side with respect to the middle portion (12a),
**characterized in that** the cross-member (12) is obtainable by the method of claim 1.

4. Cross-member according to claim 3, wherein the end portions (12b) are straight portions.

5. Cross-member according to claim 3 or claim 4, wherein the steel of said single tube of steel is selected within the group comprising:
- manganese-boron steel;
- low-alloy high-strength steel, either cold- or hot-rolled,
- multi-phase high-strength steel, either cold- or hot-rolled,
- two-phase high-strength steel,
- ferritic-bainitic high-strength steel, and
- high-alloy chromium stainless steel.

6. Cross-member according to any of claims 3 to 5, wherein the end portions (12b) have a cross-section with a larger perimeter than that of the cross-section of the middle portion (12a).

7. Twist-beam axle suspension for a motor vehicle, particularly a rear suspension, comprising a cross-member (12) according to any of claims 3 to 6 and a pair of trailing arms (14) securely connected each to a respective end portion (12b) of the cross-member (12).

8. Suspension according to claim 7, wherein the axes of the trailing arms (14) extend in the same plane and wherein the axes of the end portions (12b) of the cross-member (12) extend in said plane.

## Patentansprüche

1. Verfahren zur Herstellung eines Querträgers (12) für eine Verbundlenkeraufhängung (10) eines Kraftfahrzeugs, insbesondere für eine hintere Aufhängung, wobei das Verfahren die Schritte umfasst:
a) Zuschneiden eines röhrenförmigen, geraden Stücks Stahl auf gewünschte Länge;
b) Formen eines mittleren Bereichs (12a) des Stücks in einer ersten Ebene, sodass dieser Bereich eine bestimmte bogenförmige Kontur annimmt und verbunden ist mit einem Paar von Endbereichen (12b) des Rohrs mittels eines Paares von Verbindungsbereichen (12c), die jeweils eine Wölbung aufweisen, die im Vergleich zu dem mittleren Bereich (12a) in eine entgegengesetzte Richtung weist;
c) Quetschen zumindest des mittleren Bereichs (12a) des Stücks in einer zweiten Ebene, sodass ein vorbestimmter mittlerer Querschnitt bereitgestellt wird;
**dadurch gekennzeichnet, dass** es außerdem, zwischen den Schritten b) und c), den Schritt umfasst
d) Verdrehen des Stücks um einen bestimmten Winkel, um einen bestimmten Neigungswinkel zwischen der ersten und der zweiten Ebene zu erhalten.

2. Verfahren nach Anspruch 1, weiterhin umfassend den Schritt
e) Vergrößern von jedem der beiden Endbereiche (12b) des Stücks, sodass deren Querschnitt einen größeren Umfang aufweist als der mittlere Querschnitt des mittleren Bereichs (12a).

3. Querträger (12) für eine Verbundlenkeraufhängung (10) eines Kraftfahrzeugs, insbesondere für eine hintere Aufhängung, bestehend aus einem einzigen Stahlrohr mit einem geschlossenen Querschnitt und das intregral ausbildet
- einen bogenförmigen mittleren Bereich (12a),
- ein Paar von Endbereichen (12b), die vorgesehen sind zur sicheren Verbindung mit entsprechenden Längslenkern (14) der Verbundlenkerachse (10), und
- ein Paar von bogenförmigen Verbindungsbereichen (12c), von denen jeder zwischen dem mittleren Bereich (12a) und einem entsprechenden Endbereich (12b) angeordnet ist und eine Wölbung aufweist, die im Vergleich zu dem mittleren Bereich (12a) in eine entgegengesetzte Richtung weist, **dadurch gekennzeichnet, dass** der Querträger (12) herstellbar ist mittels eines Verfahrens nach Anspruch 1.

4. Querträger nach Anspruch 3, wobei die Endbereiche (12b) gerade Bereiche sind.

5. Querträger nach Anspruch 3 oder 4, wobei der Stahl des einzigen Stahlrohrs ausgewählt ist aus der Gruppe aus:
- Mangan-Bor-Stahl
- niedriglegierter hochfester Stahl, entweder kalt- oder warmgewalzt,
- mehrphasiger hochfester Stahl, entweder kalt- oder warmgewalzt,
- zweiphasiger hochfester Stahl,
- ferritisch-bainitischer hochfester Stahl, und
- hochlegierter, rostfreier Chromstahl.

6. Querträger nach einem der Ansprüche 3 bis 5, wobei die Endbereiche (12b) einen Querschnitt mit einem größeren Umfang aufweisen als der Querschnitt des mittleren Bereichs (12a).

7. Verbundlenkeraufhängung für ein Kraftfahrzeug, insbesondere für eine hintere Aufhängung, umfassend einen Querträger (12) nach einem der Ansprüche 3 bis 6 und ein Paar von Längslenkern (14), die jeweils sicher verbunden sind mit entsprechenden Endbereichen (12b) des Querträgers (12).

8. Aufhängung nach Anspruch 7, wobei sich die Achsen der Längslenker (14) in derselben Ebene erstrecken und wobei die Achsen der Endbereiche (12b) des Querträgers (12) sich in dieser Ebene erstrecken.

## Revendications

1. Procédé pour la production d'une traverse (12) pour une suspension d'essieu à poutre de torsion (10) pour un véhicule motorisé, particulièrement pour une suspension arrière, le procédé comprenant les étapes de :
a) la découpe d'une pièce droite tubulaire d'acier à la longueur souhaitée ;
b) la mise en forme d'une portion médiane (12a) de ladite pièce dans un premier plan pour que cette portion adopte un contour arqué donné et soit jointe à une paire de portions d'extrémité (12b) du tube par l'intermédiaire d'une paire de portions de jonction (12c) possédant chacune une concavité orientée vers le côté opposé par rapport à la portion médiane (12a) ;
c) l'écrasement d'au moins la portion médiane (12a) de la pièce dans un second plan afin de donner à sa section transversale médiane une forme donnée ;
**caractérisé en ce qu'**il comprend en outre, entre les étapes b) et c), l'étape de :
d) la rotation de la pièce d'un angle donné pour obtenir un angle donné d'inclinaison entre lesdits premier et second plans.

2. Procédé selon la revendication 1, comprenant en outre l'étape de :
e) l'agrandissement de chacune des portions d'extrémité (12b) de la pièce pour que sa section transversale possède un périmètre plus grand que celui de la section transversale médiane de la portion médiane (12a).

3. Traverse (12) pour une suspension d'essieu à poutre de torsion (10) pour un véhicule motorisé, particulièrement pour une suspension arrière, constituée d'un tube singulier d'acier qui possède une section transversale fermée et forme, de façon monobloc,
- une portion médiane arquée (12a),
- une paire de portions d'extrémité (12b) qui sont agencées pour être raccordées fermement à des bras arrière respectifs (14) de l'essieu à poutre de torsion (10), et
- une paire de portions de jonction arquées (12c), dont chacune est interposée entre la portion médiane (12a) et une portion d'extrémité respective (12b) et possède une concavité orientée vers le côté opposé par rapport à la portion médiane (12a),
**caractérisée en ce que** la traverse (12) peut être obtenue par le procédé selon la revendication 1.

4. Traverse selon la revendication 3, dans laquelle les portions d'extrémité (12b) sont des portions droites.

5. Traverse selon la revendication 3 ou la revendication 4, dans laquelle l'acier dudit tube singulier d'acier est sélectionné parmi le groupe comprenant :
- l'acier au manganèse-bore,
- l'acier de haute résistance faiblement allié, laminé à froid ou à chaud,
- l'acier de haute résistance à phases multiples, laminé à froid ou à chaud,
- l'acier de haute résistance à deux phases,
- l'acier de haute résistance ferritique-bainitique, et
- l'acier inoxydable au chrome hautement allié.

6. Traverse selon l'une quelconque des revendications 3 à 5, dans laquelle les portions d'extrémité (12b) présentent une section transversale avec un périmètre plus grand que celui de la section transversale de la portion médiane (12a).

7. Suspension d'essieu à poutre de torsion pour un véhicule motorisé, particulièrement une suspension arrière, comprenant une traverse (12) selon l'une quelconque des revendications 3 à 6 et une paire de bras arrière (14), chacun raccordé fermement à une portion d'extrémité respective (12b) de la traverse (12).

8. Suspension selon la revendication 7, dans laquelle les axes des bras arrière (14) s'étendent dans le même plan et dans laquelle les axes des portions d'extrémité (12b) de la traverse (12) s'étendent dans ledit plan.
